# EUROPEAN PATENT SPECIFICATION

(11) **EP 3 954 788 B1**
(45) Date of publication and mention of the grant of the patent: **10.01.2024**
(21) Application number: 19924395.7
(22) Date of filing: 11.04.2019
(51) Int. Cl.: C21C 5/46, C21C 5/36, C21C 5/32, C21C 5/52, C21C 5/54, C21C 5/48

(54) **CONVERTER FURNACE EQUIPMENT**
KONVERTEROFENGERÄT
ÉQUIPEMENT POUR FOUR CONVERTISSEUR

(43) Date of publication of application: 16.02.2022
(73) Proprietor: NIPPON STEEL CORPORATION, Chiyoda-ku Tokyo 100-8071 (JP); Z. I. Nekrasov Iron & Steel Institute of the National Academy of Sciences of Ukraine, Dnipro, 49050 (UA)
(72) Inventor: SASAKI, Naoto, Tokyo 100-8071 (JP); MATSUO, Michitaka, Tokyo 100-8071 (JP); NAITO, Kenichiro, Tokyo 100-8071 (JP); TATEISHI, Kiyokazu, Tokyo 100-8071 (JP); HIRATA, Hiroshi, Tokyo 100-8071 (JP); SEMYKIN S. I., Dnipro 49050 (UA)
(74) Representative: Vossius & Partner Patentanwälte Rechtsanwälte mbB
(86) International application number: PCT/JP2019/015736
(87) International publication number: WO 2020/208767

(56) References cited:
- CN-A- 103 408 013
- JP-A- H 073 323
- JP-A- H09 227 918
- JP-A- 2002 174 413
- JP-A- 2004 144 443
- JP-A- 2009 138 964
- JP-A- 2016 108 575
- US-A- 5 454 852
- US-A- 5 733 356

## Description

### [Technical Field of the Invention]

The present invention relates to converter furnace equipment for stably obtaining slag having a reduced metallic iron content and a reduced variation thereof as compared with the related art when refining a molten iron alloy in the converter furnace equipment.

### [Related Art]

Free CaO is contained in slag (hereinafter, also referred to as "converter furnace slag") generated when molten iron alloy such as molten pig iron (hereinafter, also referred to as "hot metal") is refined in a converter furnace, the free Cao undergoes a hydration reaction and expands, and volume stability decreases.

Further, although a treatment method is related to the slag, generally, iron oxide of about 1 to 40% by mass is contained in the slag, and an external appearance of the slag becomes black. When the slag is used as an aggregate for concrete or the like, the external appearance thereof is uncomfortable.

Therefore, a use of the slag is limited to a low-grade application such as a road ground improvement material and a lower-layer roadbed material, and is difficult to use for an upper-layer roadbed material, a concrete aggregate, a stone raw material, or the like.

Accordingly, in the related art, the slag is discharged from the converter furnace into a reaction container, and in the container, a reforming material such as coal ash is added to molten converter furnace slag to perform a reforming treatment to reduce the free CaO, and thus, the slag is used for the upper-layer roadbed material, the concrete aggregate, and the like, which are higher-grade applications.

Further, as metallic iron, about several tens of mass% of granular iron is contained in the converter furnace slag in a suspended state. Carbon is present in the suspended granular iron, and when the molten slag is reformed, the carbon of the granular iron reacts with iron oxide in the molten slag or an oxygen gas for stirring, and thus, bubbles of a CO gas are generated (forming) in the molten slag, which causes various adverse effects.

Further, when the slag is reused, since the granular iron is present, strength of the slag varies due to uneven distribution of the granular iron, oxidative expansion of the granular iron, or the like.

Further, the granular iron in the slag is a factor of yield loss when focusing on converter furnace blowing, and thus, the lower a granular iron content, the more preferable.

When an amount of granular iron in the slag varies, it is difficult to measure the amount of granular iron in the slag directly and instantly. Therefore, when treating the molten slag or recovering granular iron from the slag after cooling, there is no choice but to select a treatment on a heavy treatment side, and thus, efficiency decreases. In addition, forming during a melting/reforming treatment also varies in a treatment time, and thus, it is difficult to perform a stable treatment.

Further, for example, Patent Document 1 discloses a method in which granular iron in molten slag taken out from a converter furnace is settled in a reaction container and then subjected to a slag reforming treatment. However, even in this case, when an amount of granular iron in the slag varies, a settling time also varies, and thus, it is difficult to perform a stable treatment. Patent Documents 2 and 3 disclose a converter furnace equipment comprising two electrodes and a control device to control the power supply between two electrodes.

Accordingly, in the related art, after discharging the converter furnace slag to the reaction container, a treatment for reducing metallic iron in the slag in the reaction container is performed. Therefore, when the amount of the granular iron in the slag varies, there is a problem that a slag treatment time also varies.

Meanwhile, in recent years, as reported in Non-Patent Document 1, the following attempts are made. That is, when refining is performed in a converter furnace, an oxygen feeding lance is used as one electrode, a voltage is applied between the one electrode and the other electrode provided on a furnace bottom, and information on a distance between a front end of the lance and a molten metal bath surface, a thickness of a slag layer, or the like is obtained by measuring changes in a current, a voltage, and a resistance value during blowing.

However, effects of energization on properties of molten slag have not been particularly investigated.

### [Prior Art Document]

### [Patent Document]

[Patent Document 1] Japanese Unexamined Patent Application, First Publication No. 2006-199984
[Patent Document 2] US 5 733 356 A
[Patent Document 3] US 5 454 852 A

### [Non-Patent Document]

[Non-Patent Document 1] Current distribution characteristics in converter furnace bath when electric potential is applied to molten steel, C. I. Semuikin, V. F. Polyakov, E. V. Semkina, 2003

### [Disclosure of the Invention]

### [Problems to be Solved by the Invention]

An object of the present invention is to obtain slag having a small metallic iron content and a small variation thereof as compared with the related art when refining a molten iron alloy in a converter furnace and then simplify a treatment for reducing iron in the slag in a reforming treatment of the slag, and to provide converter furnace equipment capable of stably obtaining the slag having a small variation in the metallic iron content in the slag.

### [Means for Solving the Problem]

The present invention is specified by the independent claim. Preferred embodiments are defined in the dependent claims. In the following description, although numerous features may be designated as optional, it is nevertheless acknowledged that all features comprised in the independent claims are not to be read as optional.

### [Effects of the Invention]

According to the converter furnace equipment of the present invention, the metal bath can be stably and safely energized, and thus, an amount of granular iron contained in the slag and a variation thereof can be reduced. Furthermore, by reducing the variation in the amount of granular iron, it is possible to stably perform a recovery treatment of the metallic iron by magnetic sorting, which is a post process, and stably obtain the slag having a reduced metallic iron content compared with the related art. As a result, an iron yield in the converter furnace can be improved and efficiency in a reforming treatment of the slag can be improved.

### [Brief Description of the Drawings]

FIG. 1 is a diagram showing an outline of an example of a converter furnace equipment according to the present invention.
FIG. 2A is a diagram showing a relationship between an average current value and a granular iron content in slag during a hot metal dephosphorization period.
FIG. 2B is a diagram showing a relationship between the average current value and the granular iron content in slag during a decarburization period.
FIG. 3 is a diagram showing an outline of another example of the converter furnace equipment according to the present invention.
FIG. 4 is a diagram showing an outline of still another example of the converter furnace equipment according to the present invention.

### [Embodiments of the Invention]

The present inventors have investigated a method for reducing a granular iron content in slag and a variation thereof when refining a molten iron alloy in a converter furnace, and focused on energizing a slag bath and a metal bath.

Then, the present inventors have found that an amount of granular iron contained in the slag and a variation thereof are reduced when a specific amount of electric charge is applied during the energization.

Hereinafter, the present invention made based on the above findings will be described with reference to the drawings. In this specification, unless otherwise specified, "%" represents "mass%" and a "current" represents a "direct current". Further, the current is controlled by a control device (not shown).

In refining in a converter furnace, hot metal from a blast furnace is poured into the converter furnace, a slag raw material containing CaO as a main component is added, and blowing for the purpose of desiliconization and or dephosphorization and blowing for the purpose of finish dephosphorization, decarburization, and temperature adjustment are performed.

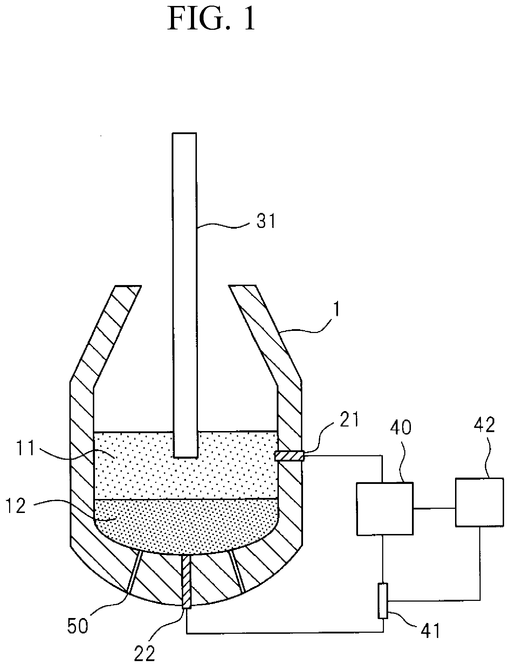

FIG. 1 is a side view showing converter furnace equipment 1 according to the present embodiment. In the converter furnace equipment 1, a first electrode 21 is installed so that a front end thereof is immersed in slag 11 generated above a molten iron alloy bath (hereinafter, also referred to as "iron bath 12"). Specifically, the first electrode 21 is embedded and disposed in a furnace belly so that a front end section thereof is at a height position between an upper surface of the slag 11 and an upper surface of the iron bath 12.

A second electrode 22 is disposed in contact with the iron bath 12.

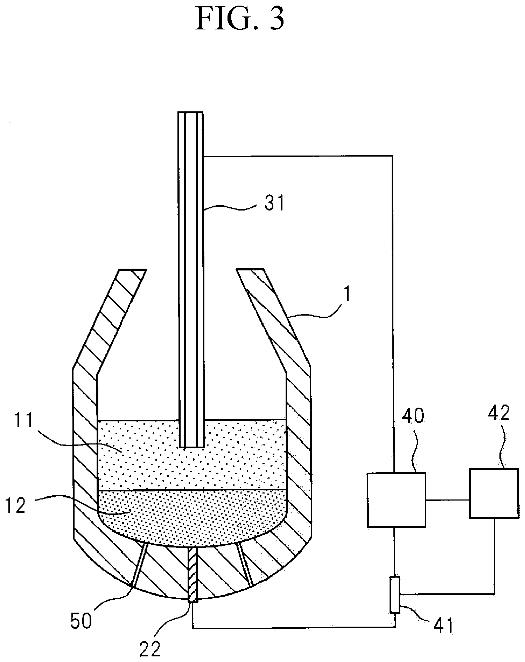

By disposing the electrodes in this way and connecting the electrodes to a power supply device 40 provided outside the converter furnace, an electric circuit can be formed by the slag 11, the iron bath 12, the first electrode 21, and the second electrode 22. Therefore, during the refining, a voltage can be applied between the electrodes to supply an electric current to the slag 11 and the iron bath 12. As shown in FIG. 3, the first electrode 21 may also serve as a hollow top blowing oxygen feeding lance 31.

Generally, as the blowing in the converter furnace, there are three method as follows.
1) Blowing method in the related art for performing desiliconization, dephosphorization, and decarburization,
2) Blowing method in which blowing for the purpose of desiliconization and/or dephosphorization and blowing for the purpose of finish dephosphorization, decarburization, and temperature adjustment are separated from each other, and
3) Blowing method in which desiliconization is performed in a separate process, and then blowing for the purpose of dephosphorization and blowing for the purpose of finish dephosphorization, decarburization, and temperature adjustment are separated from each other.

In the cases of 2) and 3), preferably, the energization is performed during one or both of the blowing for the purpose of desiliconization and/or dephosphorization and the blowing for the purpose of finish dephosphorization, decarburization, and temperature adjustment. In the blowing of each of 1) to 3), particularly, when applied at an end of the blowing, a larger effect can be obtained.

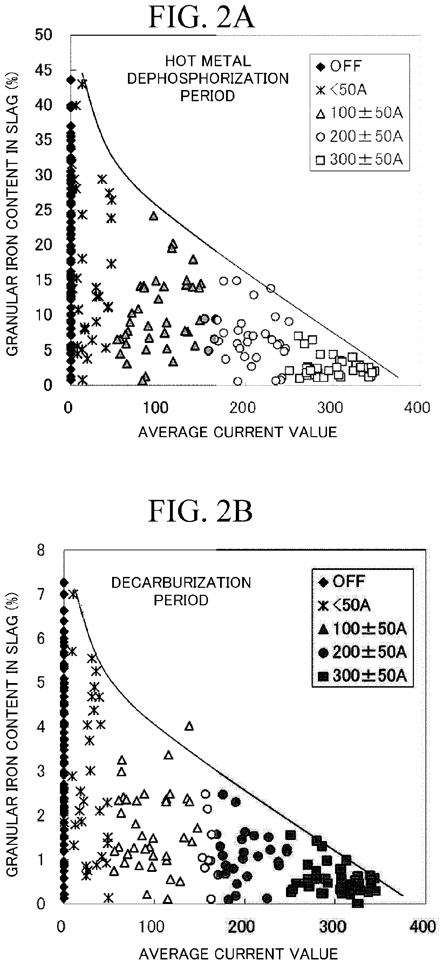

In FIGS. 2A and 2B, in a 400-ton converter furnace, the first electrode 21 on a side in contact with the slag 11 is disposed on the furnace belly, and the second electrode 22 on a side in contact with the iron bath 12 is disposed on a furnace bottom, and then, with respect to a case where in the case of dephosphorization, a current of 350A or less is supplied between the electrodes for 24 seconds immediately before a stop of the blowing to perform the blowing and in the case of decarburization, a current of 350A or less is supplied between the electrodes for 24 seconds immediately before the stop of the blowing to perform the blowing (ON), and a case where the energization is not performed between the electrodes (OFF), relationships of average current values therebetween, amounts of granular iron, and variations thereof between both cases are shown. Results shown in FIGS. 2A and 2B are results in 3) the blowing method in which desiliconization is performed in a separate process, and then the blowing for the purpose of dephosphorization and the blowing for the purpose of finish dephosphorization, decarburization, and temperature adjustment are separated from each other.

In each case, 5 charges of slag after the blowing were taken out and sampled by a reduction method to examine a total amount of granular iron and an amount of variation.

FIG. 2A shows an effect of the average current value on a metallic iron concentration in the slag after a hot metal dephosphorization treatment in the converter furnace, and FIG. 2B shows an effect on the metallic iron concentration in the slag after a decarburization treatment in the converter furnace. In both cases, as the current value increases, an iron content decreases and a variation in the iron content decreases.

Tables 1 and 2 show statistically the granular iron contents (mass%) contained in the slag shown in FIGS. 2A and 2B. As shown in Tables 1 and 2, it can be seen that as the current value increases, an average value of the iron content, a specimen standard deviation, and a relative error decrease, as compared with the case where the current value is OFF. In particular, it can be seen that the reduction effect is remarkable when the current value is 50A or greater.

Here, the specimen standard deviation is a square root of a variance value obtained by the sum of squares of distances between values of each sample and the average value. Moreover, the relative error is a value obtained by dividing the standard deviation by the average value. From Tables 1 and 2, it can be seen that when the current value is 50A or greater, not only the specimen standard deviation but also the relative error significantly decreases. Therefore, it is preferable that the power supply device 40 controls the current so that the current value is 50A or greater.

**[Table 1]**

| Current value | OFF | < 50A | 100 ± 50A | 200 ± 50A | 300 ± 50A |
|---|---|---|---|---|---|
| Average value of iron content (%) | 19.0 | 18.5 | 11.0 | 7.5 | 2.9 |
| Specimen standard deviation | 11.3 | 10.8 | 5.4 | 3.7 | 1.4 |
| Relative error | 59 | 58 | 49 | 50 | 48 |

**[Table 2]**

| Current value | OFF | < 50A | 100 ± 50A | 200 ± 50A | 300 ± 50A |
|---|---|---|---|---|---|
| Average value of iron content (%) | 3.3 | 3.1 | 1.9 | 1.3 | 0.7 |
| Specimen standard deviation | 2.4 | 2.2 | 0.9 | 0.6 | 0.3 |
| Relative error | 73 | 72 | 48 | 48 | 46 |

Generally, the slag after a reforming treatment is crushed and the metallic iron is recovered by magnetic sorting. The results in Tables 1 and 2 show that the metallic iron content itself is reduced by supplying an electric current to the slag 11, the variation in the metallic iron is reduced, and as a result, the magnetic sorting is stable, and there is a great effect that the metallic iron in the slag can be further reduced.

It is unclear why the above-mentioned effect can be obtained by supplying an electric current to the slag 11 during the blowing, but it is presumed that this is because coagulation and coarsening of the granular iron are caused by the energization to the granular iron staying in the slag, and thus, the granular iron settles due to its own weight.

The power supply device 40 performs a control so that the current does not exceed a preset maximum output current. For this control, a current detection unit 41 is provided in a middle of a wire connecting the power supply device 40 to the electrodes, a signal from the current detection unit 41 is input to the control device 42 to detect a magnitude of the current or a resistance between the electrodes, an output of the power supply device 40 is controlled according to the magnitude of the detected current.

Specifically, since a resistance value in the converter furnace fluctuates very drastically, it is desirable that the power supply device performs a transistor control rather than a thyristor control. In addition, due to a configuration of the equipment, a range and a path where the current may flow are assumed, and it is necessary to provide a mechanism for interrupting the circuit when an output current value exceeds an allowable amount of energization according to a location where the allowable amount of energization (current) is the smallest.

As the first electrode 21, for example, an electrode made of a carbon-containing brick such as a MgO-C brick can be disposed on the furnace belly of the converter furnace. When there is no large difference in the resistance value such as the brick in contact with an electrode brick also containing carbon, it is desirable to dispose a brick for insulation around the electrode brick. In addition, regarding a conductor to the outside of the furnace connected to the electrode brick, for example, it is desirable to take measures to reduce the resistance, such as increasing an area of a joint surface between a copper conductor and the brick and shortening a distance from a brick operating surface to a front end of a copper conductor, as long as the equipment configuration or economic restrictions allow.

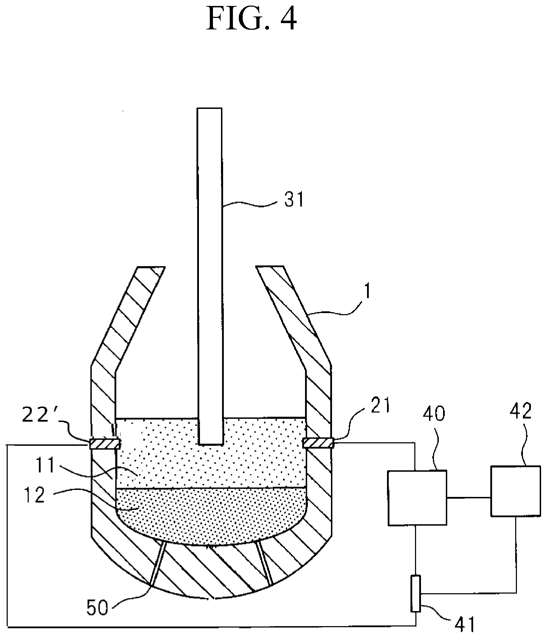

A carbon-containing brick or the like can be used for the second electrode 22. Preferably, the second electrode 22 is provided in the furnace bottom or the furnace belly of the converter furnace equipment 1. When the second electrode 22 is provided in the furnace belly, a height position of the second electrode 22 may be set to be in contact with the molten iron alloy bath or the slag 11, as in a second electrode 22' shown in FIG. 4. In the case of the example shown in FIG. 4, the power supply device 40 is configured to supply a direct current to the first electrode 21 and the second electrode 22 only through the slag 11 without passing through the iron bath 12.

When the first electrode 21 is disposed in the furnace belly, the first electrode 21 is preferably provided 200 mm to 4000 mm above, and more preferably 200 to 400 mm above, based on a static molten metal surface of the iron bath 12 estimated from a volume of the converter furnace. When the first electrode 21 is attached below a position 200 mm above based on the static molten metal surface, a frequency of short circuits due to vibrations of a metal surface is high, a frequency of current flowing into the slag is reduced, and thus, the effects are reduced. When the first electrode 21 is located higher than a position of 4000 mm above based on the static molten metal surface, a frequency of contact of the electrode with the slag portion is reduced, and thus, the effects are also reduced.

The power supply device 40 includes a mechanism that cuts off the supply of current when a current exceeding a preset maximum allowable current value flows between the first electrode 21 and the second electrode 22.

In the present equipment, when the current exceeding the maximum allowable current value flows, for example, it is determined that an appropriate current does not flow into the slag due to the current passing through an adhesion bullion. Furthermore, when the current exceeding the maximum allowable current flows, this current is not recorded as a current used in the converter furnace treatment. As a result, when the slag is sent to the post-treatment process after the refining in the converter furnace, the current value flowing only in the slag can be added and sent to the slag characteristics as information on the slag in the converter furnace. In the post-treatment process, the treatment may be performed according to this current value information, it is not necessary to perform an excessive post-treatment, and thus, the post-treatment process is stabilized.

The maximum allowable current may be determined by conducting an experiment and distinguishing between the current flowing through the slag and the current flowing through a furnace wall of the converter furnace, which is another system, the metal attached to an adhesion bullion of a refractory, or the like. This maximum allowable current may be a constant value.

One of the methods for determining whether or not the current flows through the slag is a method using the resistance value. When a circuit resistance between the first electrode, the power supply, and the second electrode is ascertained in advance by calculation or actual measurement, the resistance value between the electrodes can be obtained by subtracting the resistance value from resistances of all circuits that can be easily measured in a state of being energized during the blowing.

Generally, the resistance value via the slag is larger than a resistance value of a bullion or the like, and can be observed as a significant difference. Since a specific resistance value changes depending on a slag thickness, an electrode position, slag composition and properties (liquid phase ratio, or content rate of metal or bubble), the specific resistance value can be ascertained by measuring in advance during operation.

Further, a range of the current value flowing through the slag in the converter furnace may be determined from the variation of the current value flowing into the slag, and an upper limit thereof may be determined as the maximum allowable current. In this case, for example, the maximum allowable current can be a current value obtained by adding a value three times the variation of the current value to the average current value flowing into the slag.

Further, a mechanism may be provided, which cuts off the current after the maximum allowable current is detected and inputs the current again after a set time, for example, 30 seconds or longer.

As the first electrode 21, the top blowing oxygen feeding lance 31 may be used as shown in FIG. 3. Further, when the top blowing oxygen feeding lance 31 is used as the first electrode 21, a front end thereof can be moved up and down, a position of the front end can be moved up and down by the current flowing between the electrodes, and a magnitude of the current flowing into the slag can be controlled.

When the top blowing oxygen feeding lance 31 is used as the first electrode 21, it is necessary to provide insulation measures for a mechanism supporting the lance and a supply/discharge system of oxygen and cooling water. In addition, when there is a mechanism for sealing between the lance and a lance insertion hole, such as a seal cone, insulation measures around this portion are also required.

Further, when the top blowing oxygen feeding lance 31 is used as the first electrode 21, it is preferable that at least the front end section is made of copper from the viewpoint of wear resistance.

When the top blowing oxygen feeding lance 31 is used as the first electrode 21, a current can flow to the slag more stably as compared with a case where an electrode of the furnace belly is used.

In the case of the electrode on the furnace belly, it is conceivable that the deposits on the furnace wall become a main energization path and no current flows to the entire slag. Meanwhile, when the top blowing oxygen feeding lance 31 is used as the first electrode 21, a resistance in the furnace changes greatly depending on a relative position of the lance and the slag in addition to the state of the slag. Therefore, it is necessary to lower the lance position as much as possible. Preferably, the lance is disposed in contact with the slag. However, since conductivity of the atmosphere inside the furnace itself is also increased by iron steam or the like during the blowing, the lance and the slag do not necessarily have to be in contact with each other.

When there is a degree of freedom in the lance position, it is desirable to control the lance position according to the current value or the resistance value as described above. When the lance position is low, a heat load from a fire point and a steel bath is high, and a scattered bullion tends to adhere to the lance, which causes a decrease in a lance life and an operation failure.

The lance position can be determined by operating experience. When the lance position is raised, a contact area with the slag decreases, or the resistance value increases through a gas layer (a space above the slag containing dust and steam), and the current value becomes lower for a same voltage condition. Therefore, it is desirable to dispose the lance at a position equal to or lower than position where a minimum current value commensurate with an empirically obtained effect can be secured, and equal to or higher than a position where there is no concern about the decrease in the lance life or the operation failure.

Even when the top blowing oxygen feeding lance 31 is used as the first electrode, the maximum allowable current can be set as in the case where the first electrode is disposed in the furnace belly.

Further, the power supply device may have a function of controlling the current supply value so as not to exceed a certain value (hereinafter, also referred to as "constant current control"). It is more preferable when the power supply device 40 has a constant current control function that fluctuates the voltage according to the resistance in the furnace to keep a supply amount of the current constant. By controlling the current so as to be kept substantially constant during the blowing, it is possible to control existence of granular iron in the slag so that there is little variation.

In the constant current control, an upper limit of the current can be set so that the current flowing in the slag and the current flowing in the systems other than the slag can be distinguished.

Further, for example, the upper limit may be a set current value + a variation in current (standard deviation value). Further, a lower limit may be set to 0A so that an excessive voltage is not applied when the resistance value is high due to the properties of the slag.

The set current value for the constant current control may be set according to a relationship between the variation in the amount of granular iron in the slag obtained by an experiment and the variation in the amount of granular iron allowed in the post-treatment process. For example, in FIGS. 2A and 2B, the specimen standard deviation when a current of 200A flows in the dephosphorization treatment process is 3.7%, and since this value is a value allowed in the post-treatment process, the set current value may be 200A.

The power supply device 40 includes a mechanism that cuts off the supply of current when the resistance value between the first electrode 21 and the second electrode 22 is equal to or less than a preset resistance value. The resistance value is obtained by inputting a signal from the current detection unit 41 to the control device 42. Then, the power supply device 40 includes a mechanism that stops the output of the power supply device 40 and cuts off the supply of the current when the obtained resistance value is equal or less than the preset resistance value for a preset time after the start of the blowing.

Since the resistance value of the slag is known in advance, when it is equal to or less than the resistance value, it is presumed that the current does not flow to the slag but flows to the system other than the slag. Therefore, by obtaining the resistance value, it is possible to identify whether or not the current flows into the slag.

Furthermore, determining the maximum allowable current or the resistance value also contributes to stabilization of the equipment as described below. That is, immediately after the start of the blowing, a situation in which the current flows stably in the slag 11 such as dissolution of additives or forming is not prepared. Therefore, when the first electrode 21 suddenly comes into contact with the slag 11, there are concerns that the resistance may drop sharply and the current value may rise sharply. In this case, there is a concern that the equipment may be damaged due to heat generation depending on the current value. By providing the mechanism for cutting off the supply of current, it is possible to cut off the current and avoid an accident in such a case.

Further, even when a stray current flows out of the converter furnace due to some troubles, the supply of the current can be cut off, and thus, the equipment can be operated safely.

Preferably, a response speed of the power supply device 40 is 0.1 sec or less. As described above, the resistance value in the furnace fluctuates greatly from the substantially insulated state to a microohm or less assuming a short circuit due to the bullion, and the state changes in seconds.

For example, immediately after the start of the blowing, a sufficient amount of slag does not exist, and the atmosphere inside the furnace is also in a state of low conductivity and is substantially in an insulated state. Meanwhile, assuming a desirable energization path through the slag, it is expected that the resistance will be about 100 mΩ, depending on the state of the slag.

That is, when sudden slag forming or the like occurs, the resistance value may instantly drop from the insulated state to 100 mΩ. When the response speed of the output control is slow, the circuit may be interrupted even though the current value increases and the current flows to a sound path without being able to keep up with a large change in the resistance value.

Even when the maximum output current is set assuming the minimum resistance value in a sound range, the resistance value fluctuates by 1 digit to 2 digits depending on the state of the slag or presence or absence of gas phase intervention, and thus, the same applies when a change from a state of a high resistance value to a state of a low resistance value is rapid.

Therefore, in order to ensure stable energization, the response speed of the power supply device needs to follow these state changes. According to facts revealed by the present inventors by experiments, the resistance value in the furnace may fluctuates at intervals of about 0.1 sec. Therefore, it is desirable that a response speed of a power supply is 0.1 sec or less. In this case, the response speed means that a change from the maximum current to the minimum current and vice versa is completed within the time.

Further, in the present equipment, a bottom blowing tuyere 50 made of a porous brick, a multiple tube, or a collecting pipe is provided on the furnace bottom, and gas may be blown into the iron bath 12 from the furnace bottom during the refining to stir the iron bath 12. The number of bottom blowing tuyeres 50 may be one, but it is preferable to provide a plurality of the bottom blowing tuyeres 50. FIG. 1 shows an example in which the bottom blowing tuyeres 50 are provided at two locations.

In the present invention, a composition of the slag to be treated is not limited to a specific composition. For example, the composition has a basicity of 0.5 or greater and an iron oxide concentration of 5% or greater.

In the case of the slag having a basicity of 0.5 or greater and an iron oxide concentration of 5% or greater, there are concerns that the resistance value of the slag is likely to change depending on the composition and the current value increases sharply when the slag and the electrode are in contact with each other, and thus, it is effective to use the current control mechanism of the present application.

The composition of the molten iron alloy to be treated is not limited to a specific composition, but the effect is enhanced when it is applied to the case of treating the molten pig iron having a silicon concentration of 0.25% or less. This is because, in most cases, the amount of slag is generally small when the silicon concentration is low, but the amount of generated granular iron is determined by energy (mainly top blowing) input into the furnace or the amount of decarburization, and when the amount of the slag, a granular iron-containing concentration in the slag is relatively high. Therefore, when performing the treatment, a remarkable effect can be obtained by using the equipment of the present invention.

Moreover, it is also preferable to use the equipment of the present invention when treating molten iron in a region where a carbon concentration at a refining end point is 2.5% or greater. This is because the refining in the region is often performed with a relatively low basicity and is finished at a low temperature, and thus, the viscosity of the slag is high and the amount of granular iron contained in the slag is large.

Further, the present invention can be applied to a case where the desiliconization and dephosphorization processes are performed in different refining containers, a case where each process is performed in a separate converter furnace, and a case where both processes are performed in the same converter furnace.

The energization is performed in a latter half of the blowing. However, it is effective to perform the energization in a state where the density of granular iron in the slag increases. For this reason, it is preferable to supply the current for 1 minute before stop of oxygen feeding, that is, from 1 minute before the stop of the oxygen feeding to a time when the oxygen feeding is stopped.

As described above, according to the converter furnace equipment of the present invention, it is possible to stably and safely energize the metal bath, reduce the amount of granular iron contained in the slag, and stably obtain the slag having a reduced metallic iron content compared with the related art.

Although an example of the embodiment of the present invention is described, the present invention is not limited to the description of the embodiment of the present invention. It goes without saying that the present invention also includes various modifications within the range that can be easily conceived by those skilled in the art without departing from the description of the scope of claims.

### [Example]

Hereinafter, an example of the refining method using the converter furnace equipment of the present invention will be described with reference to more specific examples. In addition, the following example is an average result of carrying out one Example or a reference example under the same conditions with a plurality of charges of around 20 charges.

### [Example 1]

A top-bottom blowing converter furnace of 300t scale was remodeled, MgO-C bricks were installed on a furnace bottom, and MgO-C bricks were installed as upper electrodes on a furnace wall on both sides of a trunnion shaft at a position 2000 mm from the furnace bottom. An inner diameter of the furnace was 6000 mm, and a depth of molten iron was 1700 mm. A height of a lance was set so that a distance from a molten metal surface to a front end of the lance was 3000 mm, and the lance was blown. Two oxygen blowing tuyeres were installed on the furnace bottom.

Energization was started at the same time as a start of oxygen feeding, and was terminated at the same time as an end of the oxygen feeding. A power supply having a mechanism for cutting off a current when the current exceeding the maximum allowable current flows was used. The device was set so that the maximum allowable current was 500A. Further, assuming the resistance value of the slag measured in advance, the voltage of the power supply was set so that a current of 250A flowed to the slag.

A hot metal component was C: 3.8 to 3.9%, Si: 0.01%, P: 0.02%, Mn: 0.01%, an end point component was C: 0.04%, and a temperature was adjusted to around 1650°C.

At the start of the blowing, a current that was thought to be due to the effect of the bullion adhering to the furnace wall flowed with a charge of about 40%. Since the current value exceeded 500A, the power supply was cut off. After that, the power was turned on again every 30 seconds, and the power was cut off repeatedly when 500A or greater flowed. With all of the charges of approximately 40%, almost no current flowed between 2 and 2.5 minutes after the start of the blowing, and thus, the state was maintained as it was thereafter.

It is presumed that the bullion adhering to the furnace wall was mixed with the slag in the pre-charge and remained undissolved or was adhered when the charge was charged with hot metal. Considering that it disappeared within a few minutes after the start of the blowing, it is highly possible that it was hot metal. The current greater than 500A observed after the power was turned on again during this period was not included in the current average value for later verifying the effect.

At the start of the blowing, in a case where the current presumed to be affected by the above-mentioned bullion did not flow, the circuit was not cut off from the start and the energization was continued as it was (no current was observed immediately after the start). The current value gradually increased from a region where the resistance value in the furnace was high at an initial stage and the current could not be detected, and reached 220 to 270A 3 to 3.5 minutes after the start of the blowing. After that, although the current value fluctuated slightly, the current level was maintained, and when the energization interruption during temperature measurement sampling was excluded, the current flowed almost stably over the entire blowing for 14 to 14.5 minutes and ended.

After the completion of each blowing, almost all of the slag was discharged, and after the slag was cooled and coarsely pulverized, the metallic iron content in each charge was evaluated.

An average of the current values during the blowing was about 200A, which was within the range of plus or minus 20A, the average value of the amount of granular iron in the slag was 7.0%, and a specimen standard deviation indicating variation was 3.4%.

Since the variation in the amount of granular iron could be quantified in this way, from the next time onward, the value of the current flowing in the converter furnace was notified to the post-treatment process as information indicating the properties of the slag. In the post-treatment process, a treatment time was set based on this information, and thus, a stable treatment could be performed.

### [Example 2]

A top-bottom blowing converter furnace of 300t scale was remodeled, MgO-C bricks were installed on a furnace bottom, and a power supply was connected to a lance as an upper electrode on a furnace wall. An inner diameter of the furnace was 6000 mm, and a depth of molten iron was 1700 mm. A height of the lance was set so that a distance from a molten metal surface to a front end of the lance was 3000 mm, and the lance was blown. Two oxygen blowing tuyeres were installed on the furnace bottom.

Energization was started at the same time as a start of oxygen feeding, and was terminated at the same time as an end of the oxygen feeding. A power supply having a mechanism for cutting off a current when the current exceeding the maximum allowable current flows was used. The device was set so that the maximum allowable current was 500A. Further, assuming the resistance value of the slag measured in advance, the voltage of the power supply was set so that a current of 250A flowed to the slag.

A hot metal component was C: 3.8 to 3.9%, Si: 0.01%, P: 0.02%, Mn: 0.01%, an end point component was C: 0.04%, and a temperature was adjusted to around 1650°C.

Similar to Example 1, at the start of the blowing, a current that was thought to be the effect of the bullion adhering to an insulating portion of a lance hole flowed for only one charge. Since the current value exceeded 500A, the power supply was cut off. After that, when the power was turned on again after 30 seconds, almost no current flowed, and thus, the state was maintained as it was.

It is presumed that the bullion was attached so as to short-circuit the insulating portion immediately after the start of pre-charging or the blowing of the charge and was dissolved and removed by the heat from the inside of the furnace or the Joule heat when energized at 500A. The current greater than 500A observed with this charge was not included in an average value shown below.

As for the other charges, since the above-mentioned current was not observed, energization was continued without interrupting the circuit. However, no current was observed in an early stage (about 2 minutes) of the blowing. With all charges, the current value gradually increased about 3 to 3.5 minutes after the start of the blowing to reach 250A. After that, the current value gradually decreased after about 250A flowed almost stably for about 2.5 to 3 minutes, but the current increased again about 9 minutes after the start of the blowing, and a current of about 150 to 200A was observed. When the energization interruption during the temperature measurement sampling was excluded, the current flowed almost stably until the end of the blowing for 14 to 14.5 minutes. The power was turned off immediately before the end of the blowing.

An average of the current values during the blowing was about 100A, which was within the range of plus or minus 10A, the average value of the amount of granular iron in the slag was 6.2%, and a specimen standard deviation indicating variation was 2.3%.

Similar to Example 1, the value of the average value (around 100A in this case) of the normally flowing current was notified to the post-treatment process as information on the slag. In the post-treatment process, a treatment time was set based on this information, and thus, a stable treatment could be performed.

### (Reference Example)

A top-bottom blowing converter furnace of 300t scale was remodeled, MgO-C bricks were installed on a furnace bottom, and MgO-C bricks were installed as upper electrodes on a furnace wall on both sides of a trunnion shaft at a position 2000 mm from the furnace bottom. An inner diameter of the furnace was 6000 mm, and a depth of molten iron was 1700 mm. A height of the lance was set so that a distance from a molten metal surface to a front end of the lance was 3000 mm, and the lance was blown. Two oxygen blowing tuyeres were installed on the furnace bottom.

Energization was started at the same time as start of oxygen feeding, and was terminated at the same time as an end of the oxygen feeding. A power supply having a mechanism for cutting off a current when the current exceeding the maximum allowable current flows was used. The device was set so that the maximum allowable current was 500A. Further, considering a resistance value of slag, a current of 200 A was set to flow in the converter furnace.

A hot metal component was C: 3.8 to 3.9%, Si: 0.01%, P: 0.02%, Mn: 0.01%, an end point component was C: 0.04%, and a temperature was adjusted to around 1650°C. Energization was started at the same time as the start of the oxygen feeding, and was terminated at the same time as the end of the oxygen feeding.

Further, assuming the resistance value of the slag measured in advance, a voltage of the power supply was set so that a current of 250A flowed to the slag. The power supply used was one that did not have a mechanism to cut off a current when the current exceeding the maximum allowable current flowed.

Similar to Example 1, with a charge of 45%, a current that was thought to be the effect of a bullion adhering to a furnace wall at the start of the blowing flowed. Although the current value exceeded 500A, the energization and blowing were continued without turning off the power.

With these charges, the current decreased from about 2 minutes after the start of the blowing, and became a current of about 250A around 3 minutes. From a change in the resistance value, it was presumed that the energization was performed by the bullion for initial stage about 2 minutes, and then the energization was performed through the slag. The later current average value also included a current value greater than 500A during this period.

With the remaining 55% charge, the above-mentioned current was not observed, but the current value gradually increased about 3 to 3.5 minutes after the start of the blowing and reached 250A. After that, with all charges, the current value gradually decreased after the current of about 250A flowed almost stably for about 2.5 to 3 minutes, but the current increased again about 9 minutes after the start of the blowing, and a current of about 150 to 200A was observed. This current flowed almost stably until the end of the blowing for 14 to 14.5 minutes, excluding the interruption of energization during temperature measurement sampling. The power was turned off immediately before the end of the blowing.

The average current value during the blowing exceeded 300A for the initial energization and was about 250A for the charge in which the initial energization was not observed. An average value of the amount of granular iron in the slag was 7.2%, and a specimen standard deviation indicating variation was 3.3%. However, when a charge having the average current value greater than 300A and a charge having the average current value of 250A were compared with each other, no difference therebetween was found in the effects.

Meanwhile, for the former charge greater than 300A, the current average value as it is was notified to the post-treatment process, and thus, a treatment speed in a magnetic separation treatment was reduced, and as a result, recovery efficiency of the bullion deteriorated.

In addition, as a result of continuing the energization greater than 500A for 2 minutes or longer at the initial stage, when the inside of the furnace was observed after the charge was discharged, it was confirmed that wear of a furnace wall brick below the electrode was abnormally advanced. When evaluated by an average wear rate in the section of several tens of charges including the charge, it was found to correspond to an increase of about 10%. It is considered that the refractory was extremely worn due to the Joule heat generated when a large current passed through the bullion.

### [Example 3]

A top-bottom blowing converter furnace of 300t scale was remodeled, MgO-C bricks were installed on a furnace bottom, and MgO-C bricks were installed as upper electrodes on a furnace wall at a position 2000 mm from the furnace bottom. An inner diameter of the furnace was 6000 mm, and a depth of molten iron was 1700 mm. A height of the lance was set so that a distance from a molten metal surface to a front end of the lance was 3000 mm, and the lance was blown. Two oxygen blowing tuyeres were installed on the furnace bottom.

Energization was started at the same time as the start of the oxygen feeding, and was terminated at the same time as the end of the oxygen feeding. A power supply having a constant current control mechanism was used. A response speed thereof was 0.5 sec. A set value of a constant current value was set to 300A, and the allowable range was set to +50A-300A.

A hot metal component was C: 3.8 to 3.9%, Si: 0.01%, P: 0.02%, Mn: 0.01%, an end point component was C: 0.04%, and a temperature was adjusted to around 1650°C.

At the start of the blowing, a current that was thought to be due to the effect of the bullion adhering to the furnace wall flowed with a charge of about 40%. Since the current value exceeded 350A, the power supply was cut off. After that, the power was turned on again every 30 seconds, and the power was cut off repeatedly when 500A or greater flowed. With all of the charges of approximately 40%, almost no current flowed between 2 and 2.5 minutes after the start of the blowing, and thus, the state was maintained as it was thereafter.

The current of greater than 500A observed after the power was turned on again during this period was not included in the current average value for later verifying the effect.

At the start of the blowing, in a case where the current presumed to be affected by the above-mentioned bullion did not flow, the circuit was not cut off from the start and the energization was continued as it was (no current was observed immediately after the start). Even when no current was observed, a lower limit of the constant current control was set to 0A, and thus, the current value kept as it was had a high resistance value in the furnace at the initial stage, gradually increased from a region where the current could not be detected, and reached 300A 3 to 3.5 minutes after the start of the blowing. After that, the current value hardly fluctuates due to the output control of the power supply, and when the energization interruption during the temperature measurement sampling was excluded, a current of about 300A flowed almost stably over the entire blowing for 14 to 14.5 minutes and ended.

An average of the current values during the blowing was about 240A, which was within the range of plus or minus 20A, the average value of the amount of granular iron in the slag was 2.6%, and a specimen standard deviation indicating variation was 1.4%.

Since the variation in the amount of granular iron could be quantified in this way, from the next time onward, the value of the current flowing in the converter furnace was notified to the post-treatment process as information indicating the properties of the slag. In the post-treatment process, a treatment time was set based on this information, and thus, a stable treatment could be performed.

### [Example 4]

A top-bottom blowing converter furnace of 300t scale was remodeled, MgO-C bricks were installed on a furnace bottom, and MgO-C bricks were installed as upper electrodes on a furnace wall at a position 2000 mm from the furnace bottom. An inner diameter of the furnace was 6000 mm, and a depth of molten iron was 1700 mm. A height of the lance was set so that a distance from a molten metal surface to a front end of the lance was 3000 mm, and the lance was blown. Two oxygen blowing tuyeres were installed on the furnace bottom.

Energization was started at the same time as the start of the oxygen feeding, and was terminated at the same time as the end of the oxygen feeding. As a power supply, the power supply used in Example 3 was used, and a calculation mechanism for calculating a resistance value of a circuit was added. An upper limit of the resistance value was set to 1Ω, and a lower limit of the resistance value was set to 0.05Ω. Then, the current was controlled to flow 300A within the range of the upper and lower limits of the set resistance value.

When the calculated resistance value exceeds the upper and lower limits of the set resistance value, a voltage as low as 5 V was applied to the current flowing through the circuit. When the resistance value was in a range of 0.05Ω to 1Ω, a constant current could flow.

A hot metal component was C: 3.8 to 3.9%, Si: 0.01%, P: 0.02%, Mn: 0.01%, an end point component was C: 0.04%, and a temperature was adjusted to around 1650°C.

At the start of the blowing, a resistance value was observed to decrease, which was considered to be effect of a bullion adhering to the furnace wall. Since the resistance value was 0.05Ω or less, 300A was not applied. After that, when the resistance value was continuously observed, the state of 0.05Ω or less disappeared, but immediately after that, the state of exceeding 1Ω continued, and thus, a current of 300A did not flow.

Then, when 3 to 3.5 minutes elapsed after the start of the blowing, the resistance value became 1Ω or less and 0.05Ω or greater, and thus, the current value was set to 300A. The blowing for 14 to 14.5 minutes was completed, and the energization was terminated immediately before the end of the blowing.

In the blowing, an average of the current values was about 240A, which was within the range of plus or minus 20A, the average value of the amount of granular iron in the slag was 2.7%, and a specimen standard deviation indicating variation was 1.3%.

Since the variation in the amount of granular iron could be quantified in this way, from the next time onward, the value of the current flowing in the converter furnace was notified to the post-treatment process as information indicating the properties of the slag. In the post-treatment process, a treatment time was set based on this information, and thus, a stable treatment could be performed.

### [Example 5]

Under the same conditions as in Example 4, the power supply was changed to a device having a response speed of 1 msec. As for blowing and energizing conditions, the same results as in Example 4 were observed.

However, as the response speed was improved, there was almost no fluctuation in the current value, and an average of current values was about 240A, which was within the range of plus or minus 5A. In addition, an average width of the current values was more affected by an energization start time (a time when the resistance in the furnace was within the allowable range) than fluctuation of the power output during energization.

An average value of the amount of granular iron in the slag was 2.4%, and a specimen standard deviation indicating variation was 1.2%.

Since the variation in the amount of granular iron could be quantified in this way, from the next time onward, the value of the current flowing in the converter furnace was notified to the post-treatment process as information indicating the properties of the slag. In the post-treatment process, a treatment time was set based on this information, and thus, a stable processing could be performed.

By using the converter furnace equipment of the present invention, a current could be stably passed through the slag and a slag/iron bath interface. As a result, the amount of granular iron in the slag and the variation can be reduced, and the post-treatment of the slag can be performed stably.

### [Industrial Applicability]

According to converter furnace equipment of the present invention, energization can be performed stably and safely, an amount of granular iron contained in the slag can be reduced. Moreover, it is possible to stably obtain slag having a reduced metallic iron content compared with the related art, and thus, an iron yield can be improved and efficiency in a reforming treatment which is a post treatment of the slag can be improved. As a result, it is possible to obtain slag used not only for a road ground improvement material and a lower-layer roadbed material, but also for an upper-layer roadbed material, a concrete aggregate, a stone raw material, or the like, and thus, the present inventio has great industrial applicability.

### [Brief Description of the Reference Symbols]

1: converter furnace equipment
11: slag
12: iron bath
21: first electrode
22: second electrode
31: top blowing oxygen feeding lance
40: power supply device
41: current detection unit
42: control device
50: bottom blowing tuyere

## Claims

1. Converter furnace equipment (1) comprising:
a first electrode (21) configured to be disposed so that a front end thereof is immersed in a slag (11) generated above a molten iron alloy bath (12) in a converter furnace;
a second electrode (22) configured to be disposed in contact with the molten iron alloy bath (12) or the slag (11);
a power supply device (40) configured to supply a direct current to the first electrode (21) and the second electrode (22) via the slag (11);
a current detection unit (41) configured to detect a direct current and provided in a middle of a wire connecting the power supply device (40) to the first electrode (21) or the second electrode (22), and
a control device (42) configured to control the direct current according to the magnitude of the direct current detected by the current detection unit (41) so that the direct current does not exceed a preset maximum output current, and
wherein the first electrode (21) is a hollow top blowing oxygen feeding lance (31) configured to blow oxygen, and
the second electrode (22) is provided in a furnace belly of the converter furnace, and
the control device (42) is configured to perform a control so as to cut off supply of the direct current when a resistance value between the first electrode (21) and the second electrode (22) is equal to or less than a preset resistance value after start of blowing.

2. The converter furnace equipment (1) according to claim 1,
wherein the power supply device (40) is configured to supply the direct current to the first electrode (21) and the second electrode (22) via the slag (11) and the molten iron alloy bath (12).

3. The converter furnace equipment (1) according to claim 1 or 2,
wherein the control device (42) is configured to control a supply amount of the direct current to be constant.

4. The converter furnace equipment (1) according to any one of claims 1 to 3,
wherein a response speed of the power supply device (40) is 0.1 sec or less.

5. The converter furnace equipment (1) according to any one of claims 1 to 4,
wherein the control device (42) is configured to perform a control so that the direct current is 50A or greater.

## Patentansprüche

1. Konverterofenanlage (1), aufweisend:
eine erste Elektrode (21), die eingerichtet ist, derart angeordnet zu sein, dass ein vorderes Ende davon in eine Schlacke (11) eintaucht, die über einem Bad (12) aus geschmolzener Eisenlegierung in einem Konverterofen erzeugt wird,
eine zweite Elektrode (22), die eingerichtet ist, in Kontakt mit dem Bad (12) aus geschmolzener Eisenlegierung oder der Schlacke (11) angeordnet zu werden;
eine Stromzufuhrvorrichtung (40), die eingerichtet ist, die erste Elektrode (21) und die zweite Elektrode (22) über die Schlacke (11) mit Gleichstrom zu versorgen;
eine Stromerfassungseinheit (41), die eingerichtet ist, Gleichstrom zu erfassen, und die in der Mitte einer Drahtleitung vorgesehen ist, welche die Stromzufuhrvorrichtung (40) mit der ersten Elektrode (21) oder der zweiten Elektrode (22) verbindet, und
eine Steuervorrichtung (42), die eingerichtet ist, den Gleichstrom entsprechend der Größe des von der Stromerfassungseinheit (41) erfassten Gleichstroms so zu steuern, dass der Gleichstrom einen voreingestellten maximalen Ausgangsstrom nicht überschreitet, und
wobei die erste Elektrode (21) eine hohl ausgeführte, von oben blasende Sauerstoffzuführungslanze (31) ist, die zum Aufblasen von Sauerstoff ausgelegt ist, und
die zweite Elektrode (22) in einem Ofenbauch des Konverterofens vorgesehen ist, und
die Steuervorrichtung (42) eingerichtet ist, eine Steuerung auszuführen, um die Zufuhr von Gleichstrom zu unterbrechen, wenn ein Widerstandswert zwischen der ersten Elektrode (21) und der zweiten Elektrode (22) gleich oder kleiner als ein voreingestellter Widerstandswert nach Beginn des Aufblasens ist.

2. Konverterofenanlage (1) nach Anspruch 1,
wobei die Stromzufuhrvorrichtung (40) eingerichtet ist, die erste Elektrode (21) und die zweite Elektrode (22) über die Schlacke (11) und das Bad (12) aus geschmolzener Eisenlegierung mit dem Gleichstrom zu versorgen.

3. Konverterofenanlage (1) nach Anspruch 1 oder 2,
wobei die Steuervorrichtung (42) eingerichtet ist, eine konstante Zufuhrmenge an Gleichstrom zu steuern.

4. Konverterofenanlage (1) nach einem der Ansprüche 1 bis 3,
wobei eine Reaktionsgeschwindigkeit der Stromzufuhrvorrichtung (40) 0,1 s oder weniger beträgt.

5. Konverterofenanlage (1) nach einem der Ansprüche 1 bis 4,
wobei die Steuervorrichtung (42) eingerichtet ist, eine Steuerung so auszuführen, dass der Gleichstrom 50 A oder mehr beträgt.

## Revendications

1. Equipement pour four convertisseur (1), comprenant :
une première électrode (21) configurée pour être disposée de telle manière qu'une extrémité avant de celle-ci est immergée dans un laitier (11) généré au-dessus d'un bain d'alliage de fer fondu (12) dans un four convertisseur ;
une deuxième électrode (22) configurée pour être disposée de manière à être en contact avec le bain d'alliage de fer fondu (12) ou le laitier (11) ;
un dispositif de fourniture d'énergie (40) configuré pour fournir un courant direct à la première électrode (21) et à la deuxième électrode (22) par l'intermédiaire du laitier (11) ;
une unité de détection de courant (41) configurée pour détecter un courant direct et fournie au milieu d'un câble reliant le dispositif de fourniture d'énergie (40) à la première électrode (21) ou à la deuxième électrode (22), et
un dispositif de commande (42) configuré pour commander le courant direct selon l'amplitude du courant direct détecté par l'unité de détection de courant (41) de sorte que le courant direct ne dépasse pas un courant de sortie maximal prédéfini, et
dans lequel la première électrode (21) est une partie supérieure creuse soufflant de l'oxygène alimentant une lance (31) configurée pour souffler de l'oxygène, et
la deuxième électrode (22) est fournie dans une section ventrale de four du four convertisseur, et
le dispositif de commande (42) est configuré pour réaliser une commande de manière à couper la fourniture de courant direct lorsqu'une valeur de résistance entre la première électrode (21) et la deuxième électrode (22) est égale ou inférieure à une valeur de résistance prédéfinie après le démarrage du soufflage.

2. Equipement pour four convertisseur (1) selon la revendication 1,
dans lequel le dispositif de fourniture d'énergie (40) est configuré pour fournir le courant direct à la première électrode (21) et à la deuxième électrode (22) par l'intermédiaire du laitier (11) et du bain d'alliage de fer fondu (12).

3. Equipement pour four convertisseur (1) selon la revendication 1 ou 2,
dans lequel le dispositif de commande (42) est configuré pour commander une quantité de fourniture du courant direct de manière à ce qu'elle soit constante.

4. Equipement pour four convertisseur (1) selon l'une quelconque des revendications 1 à 3,
dans lequel une vitesse de réponse du dispositif de fourniture d'énergie (40) est égale ou inférieure à 0,1 sec.

5. Equipement pour four convertisseur (1) selon l'une quelconque des revendications 1 à 4,
dans lequel le dispositif de commande (42) est configuré pour réaliser une commande de telle sorte que le courant direct soit égal ou supérieur à 50 A.
